(19) Europäisches Patentamt
European Patent Office
Office européen des brevets

(11) **EP 1 001 678 B1**

(12) **FASCICULE DE BREVET EUROPEEN**

(45) Date de publication et mention
de la délivrance du brevet:
**09.04.2003 Bulletin 2003/15**

(51) Int Cl.⁷: **A01N 43/16**

(21) Numéro de dépôt: **98939722.9**

(86) Numéro de dépôt international:
**PCT/FR98/01590**

(22) Date de dépôt: **20.07.1998**

(87) Numéro de publication internationale:
**WO 99/003346 (28.01.1999 Gazette 1999/04)**

(54) **PROCEDE POUR LA STIMULATION DES DEFENSES NATURELLES DES PLANTES**

VERFAHREN ZUM STIMULIEREN DER NATÜRLICHEN ABWEHRFUNKTION BEI PFLANZEN

METHOD FOR STIMULATING NATURAL CONTROL SYSTEM OF PLANTS

(84) Etats contractants désignés:
**DE ES FR GB GR IT NL PT**

(30) Priorité: **18.07.1997 FR 9709168**

(43) Date de publication de la demande:
**24.05.2000 Bulletin 2000/21**

(73) Titulaire: **LABORATOIRES GOEMAR S.A.**
**35400 Saint-Malo (FR)**

(72) Inventeurs:
• YVIN, Jean-Claude
F-35400 Saint Malo (FR)
• CRUZ, Florence
F-35400 Saint Malo (FR)
• JOUBERT, Jean-Marie
F-35400 Saint Malo (FR)
• CLOAREC, Bernard
F-29250 Saint Pol de Léon (FR)
• RICHARD, Christophe
F-29400 Plougourvest (FR)
• PLESSE, Bertrand
F-67000 Strasbourg (FR)
• KOPP, Marguerite
F-67120 Wolxheim (FR)
• FRITIG, Bernard
F-67400 Souffelweyerseim (FR)

(74) Mandataire: **Koch, Gustave et al**
**Cabinet PLASSERAUD**
**84, rue d'Amsterdam**
**75440 Paris Cédex 09 (FR)**

(56) Documents cités:
**WO-A-93/06730     FR-A- 2 693 454**

• **BIOLOGICAL ABSTRACTS, vol. 65, Philadelphia, PA, US; abstract no. 54923, P.ALBERSHEIM ET AL.: "PLANTS INTERACT WITH MICROBIAL POLYSACCHARIDES" XP002061730 & J SUPRAMOL STRUCT, vol. 6, no. 4, 1977, pages 599-616,**
• **O.L.OZERETSKOVSKAYA ET AL.: "Oligosaccharins as Regulatory Molecules of Plants" RUSSIAN JOURNAL OF PLANT PHYSIOLOGY, vol. 43, no. 5, 1996, pages 648-655, XP002061729**
• **PATENT ABSTRACTS OF JAPAN vol. 186, no. 25 (C-1279), 29 novembre 1994 & JP 06 239880 A (NAOTAKA FURUICHI), 30 août 1994**
• **DATABASE WPI Section Ch, Week 9045 Derwent Publications Ltd., London, GB; Class B03, AN 90-338512 XP002061732 & JP 02 243697 A (MEIJI SEIKA KAISHA) , 27 septembre 1990**
• **DATABASE WPI Section Ch, Week 9444 Derwent Publications Ltd., London, GB; Class B04, AN 94-353761 XP002061733 & JP 06 277085 A (TAITO KK) , 4 octobre 1994**
• **DATABASE WPI Section Ch, Week 9313 Derwent Publications Ltd., London, GB; Class C03, AN 93-101689 XP002061734 & CS 9 101 053 A (USTAV EXPERIMENTALNEJ FYTOPATOLOGIE), 18 novembre 1992**
• **CHEMICAL ABSTRACTS, vol. 117, no. 15, 12 octobre 1992 Columbus, Ohio, US; abstract no. 147017, C.M.HEINKEL ET AL.: "Further characterization of mycolaminaran-induced resistance: temperature sensitivity against tobacco mosaic virus and function against cauliflower mosaic virus and tomato spotted wilt virus" XP002061731 & PHYTOPATHOLOGY, vol. 82, no. 6, 1992, pages 637-641,**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

- DATABASE CROPU STN-International STN-accession no. 95-84943, P.ROUHIER ET AL.: "Structural features of fungal beta-D-glucans for the efficient inhibition of the initiation of virus infection on Nicotiana tabacum" XP002085178 & PHYTOCHEMISTRY, vol. 39, no. 1, 1995, pages 57-62,

- DATABASE CROPU STN-International STN-accession no. 93-86799, K.SEIFERT ET AL.: "Phytoalexin Accumulation in Ornithopus sativus as a Response to Elicitor Treatment" XP002085179 & Z.NATURFORSCH.C, vol. 48, no. 7-8, 1993, pages 550-555,

**Description**

L'invention a pour objet un procédé pour la potentialisation et la stimulation des défenses naturelles des plantes du genre de celles qui sont agronomiquement utiles.

Il s'agit en particulier

- de la vigne et des arbres fruitiers du groupe comprenant le pommier, le poirier,
- des céréales du groupe comprenant le blé, le maïs et le riz,
- des oléagineux du groupé comprenant le soja, le tournesol et le colza et
- des plantes légumières du groupe comprenant les carottes, le chou-fleur, les tomates et les pommes de terre.

La stimulation des défenses naturelles des plantes est un problème des plus actuels et fait l'objet de nombreuses recherches.

La stimulation des défenses naturelles se traduit, dans le cas d'une plante ayant eu un premier contact avec un agent pathogène tel qu'un virus, une bactérie, un champignon ou un insecte, par le développement d'un ensemble de modifications biologiques qui confèrent à cette plante une présensibilisation grâce à laquelle elle devient capable de réagir plus efficacement à une nouvelle attaque.

Les recherches dont il a été question ci-dessus ont permis de démontrer que la présensibilisation peut être obtenue en mettant la plante en contact avec certains produits chimiques de synthèse.

On connaît par ailleurs des produits appelés éliciteurs qui, mis au contact de la plante, sont capables de stimuler dans celle-ci des réactions de défense du type:

- accumulation d'antibiotiques naturels plus connus sous le nom de phytoalexines,
- synthèse de protéines de défense telles que les chitinases ou les glucanases, également connues sous le nom de PRP (Pathogenesis-related proteins),
- durcissement des parois cellulaires par synthèse de lignine ou de protéines de réticulation,
- synthèse de messagers secondaires tels que l'éthylène, le peroxyde d'hydrogène ou l'acide salicylique.

Parmi ces produits, on peut citer notamment les oligo β 1-3 glucanes qui élicitent chez diverses plantes agronomiquement utiles les réactions de défense en question; les réponses maximales sont généralement atteintes lorsque les oligo β 1-3 glucanes sont mis en oeuvre soit sous forme de compositions liquides qui les contiennent à des concentrations de l'ordre de 200 mg/l et elles se maintiennent à un niveau comparable jusqu'à des concentrations de l'ordre de 4 g/l, soit en des quantités par hectare de 4 à 200 g.

Cette façon de procéder, qui aboutit à la mise en place de réactions de défense en l'absence de tout agent pathogène, présente un certain nombre d'inconvénients parmi lesquels on peut citer une dépense énergétique non négligeable pour la plante.

L'état de la technique est illustrée par les documents antérieurs suivants :

Le document FR-A-2693454 décrit l'utilisation de compositions contenant de la laminarine dans le but d'augmenter les réactions de défense des plantes par élicitation.

Le document Biosis, AN:78-167923 1978 décrit les propriétés élicitrices des β 1-3 glucanes.

Les documents CROPU : 95-84943, Rouhier et al. (1995) et CA : 117-147017, Heinkel et al. (1992) décrivent respectivement le traitement de Nicotiana tabacum avec des mélanges de β-D-glucans fongiques et d'un inoculum de virus de la mosaïque du tabac pour le premier et avec des mélanges de mycolaminaran et d'un inoculum de virus de la mosaïque du tabac pour le second.

L'invention a donc pour but, surtout, de mettre à la disposition des utilisateurs de nouveaux moyens permettant de faire en sorte que la stimulation des défenses naturelles de la plante ne se produise qu'en cas de besoin, autrement dit lors de l'attaque de la plante par un agent pathogène, ces moyens conférant, par conséquent, à la plante la susdite résistance systémique acquise, autrement dit une immunité contre les agents pathogènes.

Et la Société Demanderesse a le mérite d'avoir trouvé, à l'issue de recherches approfondies, que, de façon totalement surprenante et inattendue, non seulement ce résultat était atteint mais qu'il se produisait même une potentialisation des défenses naturelles dès lors que l'on applique sur une plante du genre en question une composition contenant un ou plusieurs oligo β 1-3 glucanes composés de 3 à 250, de préférence de 3 à 50 et plus préférentiellement de 3 à 30 unités saccharidiques, leurs masses moléculaires allant par conséquent de 540 à 45000 Daltons, ces oligo β 1-3 glucanes étant présents dans la composition à des concentrations inférieures à celles qui induisent directement des réactions de défense, ces concentrations étant de l'ordre de 1 à 20 mg/l, de préférence de 2 à 10 mg/l dans le cas du blé et du tabac, ce qui correspond à la mise en oeuvre par hectare de culture d'une quantité de 1 à 200 g, de préférence de 4 à 80 g des oligo β 1-3 glucanes susdéfinis.

Elle a en effet pu montrer que, lorsque les susdits oligo β 1-3 glucanes sont utilisés sous la forme de compositions dans lesquelles ils sont présents à des concentrations situées dans un domaine étroit de 1 à 20 mg/l dans le cas du blé et du tabac, ce qui correspond à la mise en oeuvre par hectare de culture des quantités indiquées ci-dessus, ils exercent sur les plantes traitées un effet potentialisateur des réactions de défense naturelles qui ne sont déclenchées qu'à partir du moment où l'attaque d'un agent pathogène se produit effectivement.

L'avantage en est que le métabolisme de la plante n'est pas dévié vers la mise en place des réactions de défense à un moment où cette mise en place est inutile; ce métabolisme est mis en alerte et ce n'est que lorsque la plante est l'objet d'une attaque qu'elle mobilise ses défenses, et cela de façon beaucoup plus intense qu'en l'absence de traitement.

Il s'ensuit que le procédé de stimulation des défenses naturelles de plantes agronomiquement utiles est caractérisé par le fait qu'il comprend l'application, notamment foliaire, aux plantes du genre en question, notamment celles du groupe défini plus haut, d'une quantité efficace d'au moins un oligo β 1-3 glucane, cette quantité efficace étant inférieure à celles qui induisent directement des réactions de défense.

Les oligo β 1-3 glucanes mis en oeuvre dans le cadre du susdit procédé sont composés de 3 à 250, de préférence de 3 à 50 et, plus préférentiellement encore, de 3 à 30 unités saccharidiques, leur masse moléculaire allant par conséquent de 540 à 45000 Daltons.

On définit la "quantité efficace" par la quantité d'au moins un oligo β 1-3 glucane qu'il convient d'appliquer par hectare de culture à traiter pour conférer aux plantes de cette culture la résistance systémique acquise dont il vient d'être question.

Elle est, dans le cas du blé, de 1 à 200 g, de préférence de 4 à 80 g.

En d'autres termes, l'invention a pour objet l'utilisation pour la potentialisation et la stimulation des défenses naturelles des plantes agronomiquement utiles, d'une composition phytosanitaire contenant un ou plusieurs oligo β 1-3 glucanes composés de 3 à 250, de préférence de 3 à 50 et plus préférentiellement de 3 à 30 unités saccharidiques, les caractéristiques de concentration en oligo β 1-3 glucanes et de mise en oeuvre de cette composition étant choisies de façon telle qu'elle apporte par hectare de culture une quantité d'oligo β 1-3 glucanes inférieure à celle qui induit directement les réactions de défense naturelles, cette quantité étant dans la pratique de 1 à 200 g, de préférence de 4 à 80 g par hectare dans le cas des céréales et notamment du blé.

La mise en oeuvre est effectuée par application, notamment par pulvérisation foliaire, en une ou deux fois, aux stades végétatifs précoces, notamment au stade 2 feuilles.

Le moment précis de la ou des applications sera choisi notamment en fonction de la plante traitée et de son stade végétatif.

La composition mise en oeuvre est généralement aqueuse dans le cas de l'application foliaire; elle contient non seulement la substance active constituée par le ou les oligo β 1-3 glucanes, mais également les constituants classiques de ce genre de composition, la concentration en substance active de la composition étant de 0,001 à 0,02 g/l, de préférence de 0,002 à 0,01 g/l dans le cas des céréales.

Pour établir la susdite composition, on peut utiliser, à la place de l'eau, un véhicule choisi dans le groupe comprenant les huiles minérales et végétales, les corps gras liquides et les alcools, notamment le propylène-glycol et le glycérol.

Les constituants classiques des susdites compositions sont choisis, en fonction des plantes à traiter, dans le groupe comprenant les solvants, les agents tensio-actifs, les agents dispersants et les charges solides.

Le volume de composition mise en oeuvre par hectare est de 10 à 1000 litres et généralement de l'ordre de 500 litres.

Dans un mode de réalisation avantageux, la susdite composition phytosanitaire comprend, en combinaison avec les oligo β 1-3 glucanes, au moins un autre produit phytosanitaire choisi dans le groupe comprenant les fongicides et les insecticides.

L'invention a également pour objet un concentré sous forme liquide ou sous forme de poudre ou de granulés, propre à fournir par dilution avec une quantité appropriée de solvant, notamment d'eau, la composition utilisée conformément à l'invention.

Pour préparer les susdits oligo β 1-3 glucanes, on peut hydrolyser des β 1-3 glucanes qui sont des polysaccharides de poids moléculaire variable de 60000 à plus de 1 million de Daltons; ces polysaccharides consistent essentiellement en des unités de D-glucose reliées spécifiquement par des liaisons β-glucosidiques entre le carbone 1 du premier groupe glucose et le carbone 3 du deuxième groupe glucose; ces liaisons sont, par conséquent, des liaisons β(1→3); il s'agit de polysaccharides linéaires pouvant porter des ramifications β 1-6 et ayant jusqu'à 10000 unités saccharidiques par molécule.

Les β 1-3 glucanes sont d'origines diverses.

Ils peuvent être extraits

- de bactéries, notamment d'*Alcaligenes faecalis*, l'extrait en question étant dénommé curdlan,
- de champignons, notamment de *Schizophyllum commune* (l'extrait étant le schizophyllan), de *Sclerotium gluca-*

*nium* (l'extrait étant le scleroglucan), d'autres extraits fongiques étant le pachyman, le lichenan (extrait de *Cetraria islandica*), le paramylon et le lentinan (extrait de *Lentinus edodes*),

- de levures, notamment de *Saccharomyces cerevisae*, les extraits ainsi obtenus étant le "Yeast glucan" et le zymosan, et
- de différentes plantes, notamment d'algues et de céréales, les extraits correspondant étant désignés par "β-glucan des algues marines" et "β-glucan des céréales", d'autres extraits étant la callose (extrait par exemple de grains de pollen de graminées).

L'hydrolyse des β 1-3 glucanes peut être effectuée par voie enzymatique ou par voie acide.

La dégradation enzymatique des β 1-3 glucanes peut être effectuée par mise en oeuvre de β-glucanases extraites de levures du type *Saccharomyces cerevisiae* ou de mollusques.

Parmi ces β-glucanases, on peut citer EC 3.2.1.21 ou EC 3.2.1.6.

A partir de l'hydrolysat ainsi obtenu, on isole par ultrafiltration la fraction oligosaccharidique recherchée.

Il est signalé que les oligo β 1-3 glucanes visés dans le cadre de l'invention peuvent également être préparés par synthèse chimique par mise en oeuvre de la réaction de Koenig et Knorr.

Une première étape de cette réaction consiste en l'acétylation du β D-glucose à chaud dans l'acétate de sodium ($CH_3COONa$).

Dans une deuxième étape, le β D-glucopentacétate ainsi obtenu est soumis à la réaction de Koenig et Knorr.

Les exemples non limitatifs qui suivent sont donnés en rapport notamment avec des modes de réalisation avantageux.

## EXEMPLE 1

**Préparation d'un oligo β 1-3 glucane constitué par un hydrolysat appelé H13.**

La matière première est constituée par le curdlan qui est un β(1-3) glucane extrait d'une bactérie, à savoir *Alcaligenes faecalis;* le curdlan est commercialisé par la Société SIGMA Chimie sous la référence C 7821.

On dissout 20 g de curdlan dans 2 litres d'eau déminéralisée.

Cette solution est thermostatée à 40°C; on y ajoute 80 unités de la susdite enzyme.

On maintient l'ensemble à 40°C pendant 2 heures et 45 minutes.

On ultrafiltre ensuite la solution obtenue dans un dispositif d'ultrafiltration tangentielle commercialisé par la Société MILLIPORE sous la marque Pellicon, équipé d'une cassette de porosité 5000 Daltons.

La pression d'entrée est de 3 bars.

Pendant cette ultrafiltration, le volume à ultrafiltrer est maintenu constant à 2 litres par addition d'un complément de 3 litres d'eau déminéralisée.

L'ultrafiltrat de 4 litres obtenu à l'issue de cette opération d'ultrafiltration contient les oligo β 1-3 glucanes de masse moléculaire inférieure à 5000 Daltons; sachant que la masse moléculaire de l'unité saccharidique est d'environ 180, les oligo β 1-3 glucanes contenues dans l'ultrafiltrat sont constituées d'au plus 30 unités saccharidiques. La solution est ensuite concentrée à un volume de 50 ml par évaporation à 80°C à l'aide d'un dispositif de marque Rotovapor, puis lyophilisé.

On obtient 16 g d'une poudre couleur crème qui constitue l'hydrolysat H13.

Une analyse par chromatographie ionique couplée à l'ampérométrie et utilisant la résine échangeuse d'ions commercialisée par la Société DIONEX Chemical Corp. sous la marque Dionex, montre que les oligo β 1-3 glucanes constitutifs de la susdite poudre ont en fait 2 à 30 unités saccharidiques, le degré de polymérisation moyen étant de 3 à 15.

## EXEMPLE 2

**Préparation d'un oligo β 1-3 glucane constitué par un extrait appelé H11.**

La matière première est une algue marine dénommée *Laminaria digitaka*.

A 300 g d'algues fraîches de type *Laminaria digitata* récoltées au mois d'août sous forme fraîche ou sèche, on ajoute progressivement 1 l d'acide sulfurique 0,3%.

L'opération est réalisée au bain-marie à une température d'environ 70°C pendant 2 heures et 30 minutes sous agitation.

Cette opération est renouvelée deux fois.

L'extrait obtenu est clarifié par filtration sur un filtre de porosité 1,2 μm.

Le liquide résultant de cette filtration est soumis à une ultrafiltration tangentielle sur une membrane de porosité 50000 Daltons.

L'ultrafiltration est réalisée en maintenant une pression de 1 bar.

On obtient ainsi un ultrafiltrat de pH 5,5 présentant un volume d'environ 0,8 litre. Cet ultrafiltrat est soumis à une dialyse sur une membrane en ester de cellulose de porosité égale à 500 Daltons.

On obtient un dialysat qui est concentré à un volume de 100 ml par évaporation à 80°C à l'aide d'un dispositif de type ROTOVAPOR, puis lyophilisé.

On obtient 7 g d'une poudre couleur crème constituant l'extrait H11.

Une analyse par chromatographie ionique couplée à l'ampérométrie et utilisant une résine échangeuse d'ions commercialisée par la Société DIONEX, montre que les oligo β 1-3 glucanes constitutifs de la susdite poudre ont en fait 3 à 30 unités saccharidiques, le degré de polymérisation moyen étant de 20 à 30.

## EXEMPLE 3

**Préparation d'un oligo β 1-3 glucane constitué par un hydrolysat appelé H14.**

La matière première est le zymosan.

On dissout dans 2 litres d'eau déminéralisée, une quantité de 20 g de zymosan qui est un β 1-3 glucane extrait de *Saccharomyces cerevisiae* et qui est commercialisé par la Société SIGMA Chimie sous la référence Z 4250.

A cette solution, on ajoute 20,4 g d'une solution concentrée d'acide sulfurique à 96% de manière à avoir une concentration finale en $SO_4H_2$ de 0,1 M.

On maintient le mélange à 75-80°C pendant 6 heures.

On neutralise ensuite le milieu jusqu'à pH 6 par addition d'une solution de soude à 50%.

On effectue une ultrafiltration tangentielle à l'aide du dispositif utilisé à l'exemple 1 et équipé d'une cassette de porosité de 5000 Daltons; la pression d'entrée est de 3 bars, cette pression étant maintenue pendant l'ultrafiltration, ce qui permet le passage des molécules de poids moléculaire légèrement supérieur au seuil de coupure théorique imposé par la cassette de porosité de 5000 Daltons; l'ultrafiltrat obtenu est soumis à une ultrafiltration supplémentaire à l'aide du même dispositif d'ultrafiltration mais équipé d'une cassette de porosité de 500 Daltons, ce grâce à quoi la solution est dessalée.

Le résultat de cette opération est concentré par évaporation à 80°C à l'aide du dispositif de type ROTOVAPOR utilisé à l'exemple 1 jusqu'à un volume de 50 ml, puis lyophilisé.

On obtient ainsi 15 g d'une poudre de couleur crème constituée d'oligo β 1-3 glucanes ayant une masse moléculaire de 500 à 5400 Daltons, c'est-à-dire de 3 à 30 unités saccharidiques; cette poudre constitue l'hydrolysat H14.

Le rendement est de 60 à 75% par rapport à la matière première.

Une analyse par chromatographie ionique couplée à l'ampérométrie et utilisant la résine échangeuse d'ions commercialisée par la Société DIONEX Chemical Corp. sous la marque Dionex, montre que les oligo β 1-3 glucanes constitutifs de la susdite poudre ont effectivement de 3 à 30 unités saccharidiques, le degré de polymérisation moyen étant de 4 à 10.

## EXEMPLE 4

**Préparation d'un oligo β 1-3 glucane constitué par un hydrolysat appelé H30.**

La matière première est constituée par le lichenan qui est un β 1-3 glucane extrait d'un champignon, *Cetraria islandica*, commercialisé par la Société SIGMA Chimie sous la référence L6133.

On utilise comme enzyme, le CEREFLO qui est une préparation de β-glucanase produite par fermentation d'une souche bactérienne de type *Bacillus subtilis* et commercialisée par la Société NOVO.

On dissout 10 g de lichenan dans 2 litres d'eau déminéralisée.

A cette solution, qui est thermostatée à 30°C, on ajoue 100 unités de la susdite enzyme.

On maintient l'ensemble à 30°C pendant 2 heures.

On ultrafiltre ensuite la solution dans un système d'ultrafiltration tangentielle commercialisé par la Société MILLIPORE sous la marque Pellicon, équipé d'une cassette de porosité 10000 Daltons.

Pendant cette ultrafiltration, le volume à ultrafiltrer est rincé par un complément de 2 litres d'eau déminéralisée.

L'ultrafiltrat de 4 litres obtenu à l'issue de cette opération d'ultrafiltration contient les oligo β 1-3 glucanes de masse moléculaire inférieure à 10000 Daltons; sachant que la masse moléculaire de l'unité saccharidique est d'environ 180, les oligo β 1-3 glucanes contenus dans l'ultrafiltrat sont constitués d'au plus 50 unités saccharidiques.

La solution est ensuite concentrée à un volume de 50 ml par évaporation à 80°C à l'aide d'un dispositif de marque ROTOVAPOR, puis lyophilisé.

On obtient 8 g d'une poudre couleur crème constituant l'hydrolysat H30.

Une analyse par chromatographie ionique couplée à l'ampérométrie et utilisant la résine échangeuse d'ions commercialisée par la Société DIONEX Chemical Corp. sous la marque Dionex, montre que les oligo β 1-3 glucanes constitutifs de la susdite poudre ont effectivement de 3 à 50 unités saccharidiques, le degré de polymérisation moyen étant de 10 à 40.

## EXEMPLE 5

**Composition concentrée aqueuse à base d'extrait H11.**

Cette composition concentrée comporte essentiellement les constituants suivants:

| | |
|---|---|
| Extrait H11 | 200 g |
| Agent tensio-actif Tween 80 | 5 g |
| Agent conservateur (méthylparaben sodé) | 5 g |
| Eau | 790 g |
| | 1000 g |

Pour sa mise en oeuvre, cette composition concentrée à 20% en poids de substance active peut être diluée avec une quantité d'eau suffisante pour amener la concentration en matière active dans le mélange final à la valeur de 0,01 g/l.

La composition ainsi obtenue, prête à l'emploi, peut être mise en oeuvre par pulvérisation sur les feuilles des plantes à traiter.

## EXEMPLE 6

**Composition sous forme de poudre à base de l'hydrolysat H13.**

Il s'agit d'une composition soluble dans l'eau qui se présente sous la forme d'une poudre contenant la matière active et les constituants classiques.

Sa constitution est comme indiqué ci-après:

| | |
|---|---|
| Hydrolysat H13 | 200 g |
| Kaolin en tant que charge minérale | 500 g |
| Agent conservateur (méthylparaben sodé) | 5 g |
| Amidon purifié en tant qu'antimottant | 295 g |
| | 1000 g |

Pour sa mise en oeuvre par pulvérisation, cette poudre à 20% en poids de substance active peut être dissoute à raison de 10 g dans 1000 ml d'eau.

## EXEMPLE 7

**Composition concentrée aqueuse à base d'hydrolysat H14.**

Cette composition concentrée comporte essentiellement les constituants suivants:

| | |
|---|---|
| Hydrolysat H14 | 200 g |
| Agent tensio-actif Tween 80 | 5 g |
| Agent conservateur (méthylparaben sodé) | 5 g |
| Eau | 790 g |
| | 1 000 g |

Pour sa mise en oeuvre, cette composition concentrée à 20% en poids de substance active peut être diluée avec une quantité d'eau suffisante pour amener la concentration en matière active dans le mélange final à la valeur de 0,01 g/l.

La composition ainsi obtenue, prête à l'emploi, peut être mise en oeuvre par pulvérisation sur les feuilles des plantes à traiter.

## EXEMPLE 8

**Composition sous forme de poudre à base de l'hydrolysat H30.**

Il s'agit d'une composition soluble dans l'eau qui se présente sous la forme d'une poudre contenant la matière active et les constituants classiques.

Sa constitution est comme indiqué ci-après:

| | |
|---|---|
| Hydrolysat H30 | 200 g |
| Kaolin en tant que charge minérale | 500 g |
| Agent conservateur (méthylparaben sodé) | 5 g |
| Amidon purifié en tant qu'antimottant | 295 g |
| | 1000 g |

Pour sa mise en oeuvre par pulvérisation, cette poudre à 20% en poids de substance active peut être dissoute à raison de 10 g de H30 dans 1000 ml d'eau.

L'efficacité des oligo β 1-3 glucanes constituant l'hydrolysat H13 et l'extrait H11 a été mise en évidence sur des plants de blé infectés par la septoriose; on a par ailleurs montré la potentialisation des défenses naturelles obtenues à l'aide de l'extrait H11 et de l'hydrolysat H13 dans le cas de cultures de cellules de tabac.

Les expériences correspondantes sont décrites dans les exemples 9 à 12.

## EXEMPLE 9

**Etude de l'efficacité de l'hydrolysat H13 dans le cas du blé infecté par *Septoria tritici*.**

Pour cette étude, on utilise 200 plantules de blé tendre d'hiver de type "Tendral" connu pour sa sensibilité à l'égard de *Septoria tritici*.

On cultive ces plantules dans 20 bacs contenant chacun un lot de 10 plantules.

On forme 5 ensembles, respectivement dénommés A, B, C, D et E et constitués chacun de 4 bacs, autrement dit de 4 lots de 10 plantules.

Dans chaque ensemble

- les premier et deuxième lots de plantules, qui sont des lots témoin, sont traités par pulvérisation foliaire au stade végétatif 2 feuilles (GS 12 selon l'échelle de Zadocks) par de l'eau distillée en présence de 0,1% de TWEEN 20,
- les troisième et quatrième lots sont traités par pulvérisation foliaire au stade végétatif 2 feuilles (GS 12 selon l'échelle de Zadocks) avec 5 ml d'une première composition conforme à l'invention comprenant, en tant que substance active, l'hydrolysat H13.

La susdite composition contient dans l'eau distillée en présence de TWEEN 20:

- dans l'expérience sur l'ensemble A, 1 mg/l d'hydrolysat H13,
- dans l'expérience sur l'ensemble B, 2 mg/l d'hydrolysat H13,
- dans l'expérience sur l'ensemble C, 10 mg/l d'hydrolysat H13,
- dans l'expérience sur l'ensemble D, 100 mg/l d'hydrolysat H13,
- dans l'expérience sur l'ensemble E, 1000 mg/l d'hydrolysat H13.

Après les susdits traitements par pulvérisation, les plantules des quatre lots de chaque ensemble sont maintenues à la température ambiante pendant 4 heures afin de laisser sécher les gouttelettes de produits à la surface des feuilles. Elles sont ensuite placées en chambre climatique à 19°C le jour et 17°C la nuit, avec une photopériode de 12 heures de lumière suivie de 12 heures d'obscurité et une humidité relative de 65%.

48 heures après ce traitement, on inocule par pulvérisation aux premier et troisième lots de chaque ensemble une suspension dans l'eau en présence de 0,1% de TWEEN 20 contenant $10^5$ pycnospores par ml d'une souche de *Septoria tritici*.

Les deuxième et quatrième lots de chaque ensemble sont soumis à la même inoculation d'agent pathogène 72 heures après le traitement par l'hydrolysat H13.

Les plantules des lots témoin et celles des lots ayant été inoculés avec *Septoria tritici* sont placées en enceinte climatisée à 19°C le jour et 17°C la nuit, avec une photopériode de 12 heures de lumière suivie de 12 heures d'obscurité et une humidité relative de 100% durant les 96 premières heures et de 85% ensuite.

21 jours après respectivement les premier et deuxième séries d'inoculation avec *Septoria tritici*, on inspecte les plantules de blé des cinq ensembles de quatre lots.

L'efficacité des produits est caractérisée, d'une part, par le pourcentage de protection PP et, d'autre part, par l'intensité d'infection II, tous deux exprimés en pourcent.

Les deux grandeurs sont définies par rapport aux lots témoin.

Le "pourcentage de protection" est calculé par la formule suivante:

$$\frac{\text{Nombre de plantes témoin présentant au moins une nécrose foliaire} - \text{Nombre de plantes traitées présentant au moins une nécrose foliaire}}{\text{Nombre de plantes témoin présentant au moins une nécrose foliaire}} \times 100$$

L'"intensité d'infection" est calculée par la formule suivante:

$$\frac{\text{Proportion de la surface foliaire nécrosée sur plantes témoin} - \text{Proportion de la surface foliaire nécrosée sur plantes traitées}}{\text{Proportion de la surface foliaire nécrosée sur plantes témoin}} \times 100$$

Les résultats de l'ensemble de ces déterminations sont réunis dans le tableau I.

TABLEAU I

| Hydrolysat mis en oeuvre | Ensemble (concentration en hydrolysat de la composition de traitement) | | Résultats enregistrés 21 jours après | | | |
|---|---|---|---|---|---|---|
| | | | Inoculation des spores 48 heures après traitement | | Inoculation des spores 72 heures après traitement | |
| | | | PP % | II % | PP % | II % |
| H 13 | A | 1 mg/l | 6,4 | 4,6 | 12,3 | 16,8 |
| | B | 2 mg/l | 34,5 | 30,4 | 58,4 | 85,4 |
| | C | 10 mg/l | 27,5 | 20,0 | 39,7 | 65,6 |
| | D | 100 mg/l | 3,3 | 4,5 | 21,9 | 28,8 |
| | E | 1000 mg/l | 0 | 0 | 0 | 0 |

De l'examen des résultats réunis dans le tableau I, il résulte

- que la pulvérisation de H13 entraîne une diminution de l'infection par *Septoria tritici*,
- que le traitement doit être effectué avant une éventuelle infection par un agent pathogène; ainsi, les résultats enregistrés pour une inoculation à 72 heures après le traitement sont meilleurs que ceux enregistrés pour une inoculation à 48 heures après le traitement,
- que les concentrations des compositions appliquées sont avantageusement d'environ 2 à environ 10 mg/l, valeurs pour lesquelles, d'après l'exemple 12 ci-après, il n'y a pas ou pratiquement pas élicitation des réactions de défense.

### EXEMPLE 10

**Etude de l'efficacité de l'extrait H11 dans le cas du blé infecté par *Septoria tritici*.**

Pour cette étude, on utilise 200 plantules de blé tendre d'hiver de type "Tendrai" connu pour sa sensibilité à l'égard de *Septoria tritici*.

On cultive ces plantules dans 20 bacs contenant chacun un lot de 10 plantules.

On forme 5 ensembles, respectivement dénommés A, B, C, D et E et constitués chacun de 4 bacs, autrement dit de 4 lots de 10 plantules.

Dans chaque ensemble

- les premier et deuxième lots de plantules, qui sont des lots témoin, sont traités par pulvérisation foliaire au stade végétatif 2 feuilles (GS 12 selon l'échelle de Zadocks) par de l'eau distillée en présence de 0,1% de TWEEN 20,
- les troisième et quatrième lots sont traités par pulvérisation foliaire au stade végétatif 2 feuilles (GS 12 selon l'échelle de Zadocks) avec 5 ml d'une première composition conforme à l'invention comprenant, en tant que substance active, l'extrait H11.

La susdite composition contient dans l'eau distillée en présence de TWEEN 20:

- dans l'expérience sur l'ensemble A, 1 mg/l d'extrait H11,
- dans l'expérience sur l'ensemble B, 2 mg/l d'extrait H11,
- dans l'expérience sur l'ensemble C, 10 mg/l d'extrait H11,
- dans l'expérience sur l'ensemble D, 100 mg/l d'extrait H11,
- dans l'expérience sur l'ensemble E, 1000 mg/l d'extrait H11.

Après les susdits traitements par pulvérisation, les plantules des quatre lots de chaque ensemble sont maintenues à la température ambiante pendant 4 heures afin de laisser sécher les gouttelettes de produits à la surface des feuilles. Elles sont ensuite placées en chambre climatique à 19°C le jour et 17°C la nuit, avec une photopériode de 12 heures de lumière suivie de 12 heures d'obscurité et une humidité relative de 65%.

48 heures après ce traitement, on inocule par pulvérisation aux premier et troisième lots de chaque ensemble une suspension dans l'eau en présence de 0,1% de TWEEN 20 contenant $10^5$ pycnospores par ml d'une souche de *Septoria tritici*.

Les deuxième et quatrième lots de chaque ensemble sont soumis à la même inoculation d'agent pathogène 72 heures après le traitement par l'extrait H11.

Les plantules des lots témoin et celles des lots ayant été inoculés avec *Septoria tritici* sont placées en enceinte climatisée à 19°C le jour et 17°C la nuit, avec une photopériode de 12 heures de lumière suivie de 12 heures d'obscurité et une humidité relative de 100% durant les 96 premières heures et de 85% ensuite.

21 jours après respectivement les premier et deuxième séries d'inoculation avec *Septoria tritici*, on inspecte les plantules de blé des cinq ensembles de quatre lots.

L'efficacité des produits est caractérisée, d'une part, par le pourcentage de protection PP et, d'autre part, par l'intensité d'infection II, tous deux exprimés en pourcent.

Les deux grandeurs sont définies par rapport aux lots témoin.

Le "pourcentage de protection" est calculé par la formule suivante:

$$\frac{\text{Nombre de plantes témoin présentant au moins une nécrose foliaire} - \text{Nombre de plantes traitées présentant au moins une nécrose foliaire}}{\text{Nombre de plantes témoin présentant au moins une nécrose foliaire}} \times 100$$

L'"intensité d'infection" est calculée par la formule suivante:

$$\frac{\text{Proportion de la surface foliaire nécrosée sur plantes témoin} - \text{Proportion de la surface foliaire nécrosée sur plantes traitées}}{\text{Proportion de la surface foliaire nécrosée sur plantes témoin}} \times 100$$

Les résultats de l'ensemble de ces déterminations sont réunis dans le tableau II.

TABLEAU II

| Extrait mis en oeuvre | Ensemble (concentration en hydrolysat de la composition de traitement) | | Résultats enregistrés 21 jours après | | | |
|---|---|---|---|---|---|---|
| | | | Inoculation des spores 48 heures après traitement | | Inoculation des spores 72 heures après traitement | |
| | | | PP % | II % | PP % | II % |
| H 11 | A | 1 mg/l | 32,2 | 50,7 | 30,1 | 45,5 |
| | B | 2 mg/l | 38,5 | 67,3 | 39,7 | 73,7 |
| | C | 10 mg/l | 24,1 | 33,1 | 29,5 | 62,7 |
| | D | 100 mg/l | 12,0 | 18,3 | 24,9 | 30,0 |
| | E | 1000 mg/l | 0 | 0 | 0 | 0 |

De l'examen des résultats réunis dans le tableau II, il résulte

- que la pulvérisation de H11 entraîne une diminution de l'infection par *Septoria tritici*,
- que le traitement doit être effectué avant une éventuelle infection par un agent pathogène; ainsi, les résultats enregistrés pour une inoculation à 72 heures après le traitement sont meilleurs que ceux enregistrés pour une inoculation à 48 heures après le traitement,
- que les concentrations des compositions appliquées sont avantageusement d'environ 2 à environ 10 mg/l, valeurs pour lesquelles, d'après l'exemple 12 ci-après, il n'y a pas ou pratiquement pas élicitation des réactions de défense.

## EXEMPLE 11

**Etude de l'efficacité agronomique de l'extrait H11 dans le cas de la septoriose du blé.**

Le champignon responsable de la maladie est *Septoria tritici*.
La matière est mise en oeuvre sous la forme de la composition identifiée à l'exemple 5.
L'expérimentation est menée en plain champ sur une variété sensible à la septoriose et permet de comparer plusieurs doses de matière active, à savoir 0,4 g/ha, 4 g/ha, 20 g/ha, 40 g/ha, 60 g/ha et 80 g/ha.
Chaque dose est testée sur quatre parcelles de 20 m$^2$. Quatre parcelles supplémentaires servent de témoin.
L'efficacité est appréciée par l'intensité d'infection qui est calculée par la formule suivante:

$$\frac{\text{Proportion de la surface foliaire nécrosée sur plantes témoin} - \text{Proportion de la surface foliaire nécrosée sur plantes traitées}}{\text{Proportion de la surface foliaire nécrosée sur plantes témoin}} \times 100$$

La composition est appliquée par pulvérisation foliaire qui est effectuée au stade BBCH 30 avec un volume de 250 l/ha.
La contamination est naturelle.
La proportion de la surface attaquée dans les parcelles témoin, c'est-à-dire non traitées, est de 17%.
On a répété trois fois ces expériences et la moyenne des résultats est rassemblée dans le tableau III.

TABLEAU III

| Dose/ha | Efficacité en % |
|---|---|
| 0,4 g | 6 |
| 4 g | 20 |
| 20 g | 40 |

TABLEAU III   (suite)

| Dose/ha | Efficacité en % |
|---|---|
| 40 g | 41 |
| 60 g | 40 |
| 80 g | 35 |

L'examen des valeurs réunies dans le tableau III montre que les meilleurs résultats sont obtenus par des doses de 20 à 60 g/ha.

## EXEMPLE 12

**Expériences montrant la potentialisation des défenses naturelles des plantes par l'extrait H11 et l'hydrolysat H13.**

On a procédé à deux expériences.

Dans une première expérience, en vue d'étudier l'effet éliciteur direct des produits H11 et H13, on a appliqué à des cultures de cellules de tabac BY des compositions à concentrations croissantes de H11 et de H13, à savoir:

- pour H11, des compositions à concentrations successivement égales à 2 mg/l, 10 mg/l, 20 mg/l, 50 mg/l et 200 mg/l,
- pour H13, des compositions à concentrations successivement égales à 2 mg/l, 10 mg/l, 50 mg/l et à 200 mg/l.

Pour chaque composition, on a testé quatre marqueurs des réactions de défenses, à savoir:

- l'activité phénylammonia lyase (PAL), qui est une enzyme clé pour la synthèse des phytoalexines chez les plantes,
- l'activité O-méthyl transférase (OMT), qui est une enzyme impliquée dans la synthèse de lignine,
- l'activité lipoxygénase (LOX), qui est une enzyme impliquée dans la génération de jasmonate de méthyle, c'est-à-dire d'un élément de la cascade de signalisation aboutissant à l'activité des gènes de défense et
- la teneur en acide salicylique (SA), qui est un autre messager secondaire impliqué dans les réactions de défense.

Les résultats sont exprimés sous forme d'un facteur d'induction des marqueurs étudiés représentant le rapport entre les valeurs mesurées dans les cellules élicitées et celles mesurées dans des cellules témoin non élicitées.

Les résultats de ces mesures qui sont effectuées de 4 à 48 heures après le début de l'incubation, sont réunis dans le tableau IV ci-après.

TABLEAU IV

| Oligo β 1-3 glucanes mis en oeuvre | | Facteur d'induction du marqueur de défense | | | |
|---|---|---|---|---|---|
| | | PAL | OMT | LOX | SA |
| H11 | 2 mg/l | NS* | NS | NS | NS |
| | 10 mg/l | NS | NS | NS | NS |
| | 20 mg/l | 33 | | NS | |
| | 50 mg/l | 90 | | 2,5 | |
| | 200 mg/l | 150 | 3,0 | 8,0 | 35,0 |
| H13 | 2 mg/l | NS | | | NS |
| | 10 mg/l | 67 | | | NS |
| | 50 mg/l | 176 | | | 30,0 |
| | 200 mg/l | 170 | | | 30,0 |

* NS = non significatif

L'examen de ces résultats montre que les produits H11 et H13 élicitent des réactions de défense dans les cellules traitées, ces élicitations se traduisant par l'accumulation des marqueurs lorsque lesdits produits sont utilisés à des concentrations allant de 20 à 200 mg par litre; en revanche, sur la base des marqueurs PAL et SA, ces réactions ne sont pas induites de manière significative lorsque la concentration en éliciteur, c'est-à-dire en produit H11 ou H13, est de 2 ou de 10 mg par litre.

Dans une deuxième expérience, on prétraite des cultures des mêmes cellules de tabac BY au jour suivant le repiquage en utilisant des compositions présentant des concentrations en extrait H11 égales à 2 ou à 10 mg par litre.

Six jours plus tard, ces cultures ainsi que des cultures témoin, non prétraitées, sont traitées par une composition contenant des oligopectines à la concentration de 40 mg par litre.

Il s'agit là d'une situation qui mime l'attaque par un agent pathogène.

On suit alors la cinétique d'accumulation d'acide salicylique (SA) de 4 à 48 heures après le traitement.

Ces mesures montrent que les cellules des cultures témoin accumulent SA jusqu'à des teneurs qui ne dépassent pas 300 ng par gramme de masse fraîche (MF).

Elles montrent également que le prétraitement par H11 stimule très fortement, de façon totalement inattendue, l'accumulation d'acide salicylique lorsque la plante est élicitée six jours plus tard par des oligopectines; on note en effet, dans les cellules de tabac ainsi traitées, une accumulation en SA de 2900 ng par gramme de MF lorsque la concentration de H11 lors du prétraitement est de 2 mg par litre et de 700 ng par gramme de MF lorsque la concentration, lors du prétraitement, est de 10 mg par litre.

L'effet potentialisateur d'une réaction de défense obtenu grâce à l'utilisation conforme à l'invention est ainsi démontré.

**Revendications**

1. Procédé propre à conférer à une plante agronomiquement utile une résistance systémique acquise c'est à dire une immunité à l'égard d'un agent pathogène, immunité qui se traduit, au moment où la plante se trouve être au contact dudit agent pathogène, par une potentialisation des défenses naturelles, ledit procédé étant **caractérisé par le fait que** l'on traite ladite plante, avant un contact avec ledit agent pathogène, par application notamment foliaire d'une composition liquide comportant un oligo $\beta$ 1-3 glucane composé de 3 à 250 unités sacharidiques, la concentration de la composition liquide en oligo $\beta$ 1-3 glucane étant inférieure à la concentration à laquelle ledit oligo $\beta$ 1-3 glucane agit en tant qu'éliciteur c'est-à-dire à laquelle il induit directement les réactions de défense.

2. Procédé selon la revendication 1, **caractérisé par** le fait, d'une part, que l'oligo $\beta$ 1-3 glucane comporte de 3 à 50, de préférence de 3 à 20 unités saccharidiques et, d'autre part, que la concentration de la composition liquide en oligo $\beta$ 1-3 glucane est de 1 à 20, de préférence de 2 à 10mg/l dans le cas des céréales et notamment du blé ainsi que dans le cas du tabac, ce qui correspond à la mise en oeuvre par hectare de culture d'une quantité de 1 à 200g de préférence de 2 à 80g d'oligo $\beta$ 1-3 glucane.

3. Procédé selon la revendication 2, **caractérisé par le fait que** l'oligo $\beta$ 1-3 glucane est obtenu à partir du curdlan, qu'il est composé de 2 à 30 unités saccharidiques et que son degré de polymérisation moyen est de 3 à 15.

4. Procédé selon la revendication 2, **caractérisé par le fait que** l'oligo $\beta$ 1-3 glucane est obtenu à partir de laminaria digitata, qu'il est composé de 3 à 30 unités saccharidiques et que son degré de polymérisation moyen est de 20 à 30.

5. Procédé selon la revendication 2, **caractérisé par le fait que** l'oligo $\beta$ 1-3 glucane est obtenu à partir du zymosan, qu'il est composé de 3 à 30 unités saccharidiques et que son degré de polymérisation moyen est de 4 à 10.

6. Procédé selon la revendication 2, **caractérisé par le fait que** l'oligo $\beta$ 1-3 glucane est obtenu à partir du lichenan, qu'il est composé de 3 à 50 unités saccharidiques et que son degré de polymérisation moyen est de 10 à 40.

7. Utilisation par application, notamment foliaire sur une plante agronomiquement utile et avant contact avec un agent pathogène, d'une composition liquide comportant un oligo $\beta$ 1-3 glucane composé de 3 à 250 unités saccharidiques à une concentration inférieure à celle à laquelle il induit directement les réactions de défense, pour conférer à ladite plante une résistance systémique acquise c'est à dire une immunité à l'égard d'un agent pathogène, immunité qui se traduit, au moment où la plante se trouve être au contact dudit agent pathogène par une potentialisation des défenses naturelles.

8. Utilisation selon la revendication 7, **caractérisé par** le fait, d'une part, que l'oligo $\beta$ 1-3 glucane comprend de 3 à 50, de préférence de 3 à 30 unités sacharidiques et, d'autre part, que la concentration de la composition liquide en oligo $\beta$ 1-3 glucane est de 1 à 20, de préférence de 2 à 10mg/l, la quantité d'oligo $\beta$ 1-3 glucane mise en oeuvre par hectare de culture étant de 1 à 200, de préférence de 4 à 80g.

9. Utilisation selon la revendication 8, **caractérisé par le fait que** l'oligo β 1-3 glucane est obtenu à partir du curdlan, qu'il est composé de 2 à 30 unités saccharidiques et que son degré de polymérisation moyen est de 3 à 15.

10. Utilisation selon la revendication 8, **caractérisé par le fait que** l'oligo β 1-3 glucane est obtenu à partir de laminaria digitata, qu'il est composé de 3 à 30 unités saccharidiques et que son degré de polymérisation moyen est de 20 à 30.

11. Utilisation selon la revendication 8, **caractérisé par le fait que** l'oligo β 1-3 glucane est obtenu à partir du zymosan, qu'il est composé de 3 à 30 unités saccharidiques et que son degré de polymérisation moyen est de 4 à 10.

12. Utilisation selon la revendication 8, **caractérisé par le fait que** l'oligo β 1-3 glucane est obtenu à partir du lichenan, qu'il est composé de 3 à 50 unités saccharidiques et que son degré de polymérisation moyen est de 10 à 40.

## Patentansprüche

1. Verfahren, das in der Lage ist, einer landwirtschaftlichen Nutzpflanze eine erworbene systemische Widerstandsfähigkeit zu verleihen, d.h. eine Immunität gegenüber einem pathogenen Stoff, eine Immunität, die sich zu dem Zeitpunkt, zu dem sich die Pflanze mit diesem pathogenen Stoff in Kontakt befindet, in einer Potenzierung der natürlichen Abwehrsysteme ausdrückt, **dadurch gekennzeichnet, dass** die Pflanze vor einem Kontakt mit dem pathogenen Stoff dadurch behandelt wird, dass insbesondere auf die Blätter eine flüssige Zusammensetzung aufgetragen wird, die eine Oligo-β-1-3-Glucanverbindung von 3 bis 250 Saccharideinheiten umfasst, wobei die Konzentration der flüssigen Zusammensetzung an Oligo-β-1-3-Glucan geringer als die Konzentration ist, bei der das Oligo-β-1-3-Glucan als Elizitator wirkt, d.h. bei der es direkt die Abwehrreaktionen induziert.

2. Verfahren nach Anspruch 1, **dadurch gekennzeichnet, dass** einerseits Oligo-β-1-3-Glucan 3 bis 5, vorzugsweise 3 bis 20 Saccharideinheiten umfasst, und dass andererseits die Konzentration der flüssigen Zusammensetzung an Oligo-β-1-3-Glucan 1 bis 20, vorzugsweise 2 bis 10 mg/l im Falle von Getreide und insbesondere Weizen sowie Tabak beträgt, was dem Einsatz einer Menge von 1 bis 200 g, vorzugsweise von 2 bis 80 g Oligo-β-1-3-Glucan pro Kulturhektar entspricht.

3. Verfahren nach Anspruch 2, **dadurch gekennzeichnet, dass** das Oligo-β-1-3-Glucan aus Curdlan gewonnen wird, dass es sich aus 2 bis 30 Saccharideinheiten zusammensetzt und sein durchschnittlicher Polymerisationsgrad 3 bis 15 beträgt.

4. Verfahren nach Anspruch 2, **dadurch gekennzeichnet, dass** das Oligo-β-1-3-Glucan aus Laminaria digitata gewonnen wird, dass es sich aus 3 bis 30 Saccharideinheiten zusammensetzt und sein durchschnittlicher Polymerisationsgrad 20 bis 30 beträgt.

5. Verfahren nach Anspruch 2, **dadurch gekennzeichnet, dass** das Oligo-β-1-3-Glucan aus Zymosan gewonnen wird, dass es sich aus 3 bis 30 Saccharideinheiten zusammensetzt und sein durchschnittlicher Polymerisationsgrad 4 bis 10 beträgt.

6. Verfahren nach Anspruch 2, **dadurch gekennzeichnet, dass** das Oligo-β-1-3-Glucan aus Lichenan gewonnen wird, dass es sich aus 3 bis 50 Saccharideinheiten zusammensetzt und sein durchschnittlicher Polymerisationsgrad 10 bis 40 beträgt.

7. Verwendung durch Auftragung einer flüssigen Zusammensetzung, die eine Oligo-β-1-3-Glucanverbindung von 3 bis 250 Saccharideinheiten mit einer Konzentration von weniger als jener, bei der direkt die Abwehrreaktionen induziert werden, umfasst, insbesondere auf die Blätter einer landwirtschaftlichen Nutzpflanze vor dem Kontakt mit einem pathogenen Stoff, um dieser Pflanze eine erworbene systemische Widerstandsfähigkeit zu verleihen, d.h. eine Immunität gegenüber einem pathogenen Stoff, eine Immunität, die zu dem Zeitpunkt, zu dem sich die Pflanze im Kontakt mit dem pathogenen Stoff befindet, durch eine Potenzierung der natürlichen Abwehrkräfte zum Ausdruck kommt.

8. Verwendung nach Anspruch 7, **dadurch gekennzeichnet, dass** einerseits Oligo-β-1-3-Glucan 3 bis 50, vorzugsweise 3 bis 30 Saccharideinheiten umfasst, und dass andererseits die Konzentration der flüssigen Zusammensetzung an Oligo-β-1-3-Glucan 1 bis 20, vorzugsweise 2 bis 10 mg/l beträgt, wobei die Menge an Oligo-β-1-3-Glucan, die pro Kulturhektar eingesetzt wird, 1 bis 200 g, vorzugsweise 4 bis 80 g beträgt.

9. Verwendung nach Anspruch 8, **dadurch gekennzeichnet, dass** das Oligo-β-1-3-Glucan aus Curdlan gewonnen wird, dass es sich aus 2 bis 30 Saccharideinheiten zusammensetzt und sein durchschnittlicher Polymerisationsgrad 3 bis 15 beträgt.

10. Verwendung nach Anspruch 8, **dadurch gekennzeichnet, dass** das Oligo-β-1-3-Glucan aus Laminaria digitata gewonnen wird, dass es sich aus 3 bis 30 Saccharideinheiten zusammensetzt und sein durchschnittlicher Polymerisationsgrad 20 bis 30 beträgt.

11. Verwendung nach Anspruch 8, **dadurch gekennzeichnet, dass** das Oligo-β-1-3-Glucan aus Zymosan gewonnen wird, dass es sich aus 3 bis 30 Saccharideinheiten zusammensetzt und sein durchschnittlicher Polymerisationsgrad 4 bis 10 beträgt.

12. Verwendung nach Anspruch 8, **dadurch gekennzeichnet, dass** das Oligo-β-1-3-Glucan aus Lichenan gewonnen wird, dass es sich aus 3 bis 50 Saccharideinheiten zusammensetzt und sein durchschnittlicher Polymerisationsgrad 10 bis 40 beträgt.

## Claims

1. A method capable of endowing an agronomically useful plant with an acquired systemic resistance, i.e., immunity to a pathogenic agent, which immunity results in potentializing natural defences when the plant comes into contact with said pathogenic agent, said method being **characterized in that**, prior to contact with said pathogenic agent, said plant is treated by application, in particular application to the leaves, of a liquid composition comprising an oligo 1-3 β glucane composed of 3 to 250 saccharide units, the concentration in the liquid composition of oligo 1-3 β glucane being less than the concentration at which said oligo 1-3 β glucane acts as an elicitor, i.e., at which it directly induces defence reactions.

2. A method according to claim 1, **characterized in that** the oligo 1-3 β glucane contains 3 to 50, preferably 3 to 20 saccharide units and **in that** the concentration of oligo 1-3 β glucane in the liquid composition is 1 to 20, preferably 2 to 10 mg/l in the case of cereals, and in particular wheat, and also in the case of tobacco, which corresponds to the use of a quantity of 1 to 200 g, preferably 2 to 80 g of oligo 1-3 β glucane per cultured hectare.

3. A method according to claim 2, **characterized in that** the oligo 1-3 β glucane is obtained from curdlan, **in that** it is composed of 2 to 30 saccharide units and **in that** its mean degree of polymerization is 3 to 15.

4. A method according to claim 2, **characterized in that** the oligo 1-3 β glucane is obtained from laminaria digitata, **in that** it is composed of 3 to 30 saccharide units and **in that** its mean degree of polymerization is 20 to 30.

5. A method according to claim 2, **characterized in that** the oligo 1-3 β glucane is obtained from zymosan, **in that** it is composed of 3 to 30 saccharide units and **in that** its mean degree of polymerization is 4 to 10.

6. A method according to claim 2, **characterized in that** the oligo 1-3 β glucane is obtained from lichenan, **in that** it is composed of 3 to 50 saccharide units and **in that** its mean degree of polymerization is 10 to 40.

7. Use by application, in particular to leaves, onto an agronomically useful plant and prior to contact with a pathogenic agent, of a liquid composition comprising an oligo 1-3 β glucane composed of 3 to 250 saccharide units in a concentration that is lower than that at which it directly induces defence reactions, to endow said plant with an acquired systemic resistance, i.e., immunity to a pathogenic agent, which immunity results in potentializing natural defences when the plant comes into contact with said pathogenic agent .

8. Use according to claim 7, **characterized in that** the oligo 1-3 β glucane contains 3 to 50, preferably 3 to 30 saccharide units and **in that** the concentration of oligo 1-3 β glucane in the liquid composition is 1 to 20, preferably 2 to 10 mg/l, the quantity of oligo 1-3 β glucane employed per cultured hectare is 1 to 200, preferably 4 to 80 g.

9. Use according to claim 8, **characterized in that** the oligo 1-3 β glucane is obtained from curdlan, **in that** it is composed of 2 to 30 saccharide units and **in that** its mean degree of polymerization is 3 to 15.

**10.** Use according to claim 8, **characterized in that** the oligo 1-3 β glucane is obtained from laminaria digitata, **in that** it is composed of 3 to 30 saccharide units and **in that** its mean degree of polymerization is 20 to 30.

**11.** Use according to claim 8, **characterized in that** the oligo 1-3 β glucane is obtained from zymosan, **in that** it is composed of 3 to 30 saccharide units and **in that** its mean degree of polymerization is 4 to 10.

**12.** Use according to claim 8, **characterized in that** the oligo 1-3 β glucane is obtained from lichenan, **in that** it is composed of 3 to 50 saccharide units and **in that** its mean degree of polymerization is 10 to 40.